# EUROPÄISCHE PATENTSCHRIFT

(11) **EP 3 204 934 B1**
(45) Veröffentlichungstag und Bekanntmachung des Hinweises auf die Patenterteilung: **18.12.2019**
(21) Anmeldenummer: 15788480.0
(22) Anmeldetag: 09.10.2015
(51) Int. Cl.: G09G 5/02, A61B 3/032, G01J 3/46, G01J 3/52, H04N 1/60

(54) **SYSTEM UND VERFAHREN ZUR FARBOPTIMIERUNG**
SYSTEM AND METHOD FOR COLOUR OPTIMISATION
SYSTÈME ET PROCÉDÉ D'OPTIMISATION DE COULEUR

(30) Priorität: 09.10.2014 DE 102014114707; 21.10.2014 DE 102014115351
(43) Veröffentlichungstag der Anmeldung: 16.08.2017
(73) Patentinhaber: Techkon GmbH, 61462 Koenigstein im Taunus (DE)
(72) Erfinder: KRZYMINSKI, Ulrich, 61476 Kronberg im Taunus (DE)
(74) Vertreter: Hofmann, Andreas
(86) Internationale Anmeldenummer: PCT/IB2015/057747
(87) Internationale Veröffentlichungsnummer: WO 2016/055983

(56) Entgegenhaltungen:
- WO-A1-95/31067
- JP-A- 2010 268 294
- US-A- 5 726 672
- US-A1- 2010 020 117
- US-A1- 2014 168 253
- US-A1- 2014 232 923
- US-B1- 6 439 722
- US-B1- 7 102 648

## Beschreibung

### Technisches Gebiet

Die vorliegende Erfindung betrifft das technische Gebiet der Farboptimierung, insbesondere der Anzeige farboptimierter Bilddateien auf einer beliebigen Internetseite eines beliebigen Anzeigegeräts; im Spezielleren betrifft die vorliegende Erfindung ein gattungsgemäßes System nach dem Oberbegriff des Anspruchs 1.

### Stand der Technik

Bislang lag der Kundin oder dem Kunden im Einzelhandel das reale Produkt vor, das sie bzw. er sich kaufen konnte.

Im Onlinehandel über das Internet betrachtet die Kundin oder der Kunde auf dem Bildschirm ein virtuelles Bild des Produkts. Bei Lieferung des Produkts erweist sich oftmals die Diskrepanz in der Farbgebung; entsprechend hoch sind die Rücksendequoten im Onlinehandel. Zum Beispiel steht bei Retouren von Kleidung der Rücksendegrund "Farbe des Produkts nicht wie erwartet" direkt nach "Größe passt nicht".

Ursache für die unterschiedliche Farbanzeige der Produkte auf unterschiedlichen Bildschirmen ist die technische Vielfalt der Bildschirme und sind die unterschiedlichsten Einstellungen, die vom/n der Anwender/in und von den Programmen vorgenommen werden können, zum Beispiel hinsichtlich Helligkeit, Kontrast und/oder Farbgebung.

Bildschirme zu kalibrieren bzw. Farben verbindlich anzuzeigen, wurde bislang in industriellen Anwendungen technisch aufwändig realisiert. Hierbei kommen Farbmessgeräte, die die Bildschirmfarben messen, und Software, die aus den gewonnenen Messwerten Farbkorrekturen durchführt, zum Einsatz.

Derartige Lösungen sind für den oben beschriebenen Consumer-Bereich aufgrund des hohen Preises und des beträchtlichen technischen Aufwands ungeeignet. Die Systeme sind außerdem nur für hochwertige Bildschirme ausgelegt. Displays von mobilen Endgeräten, wie etwa von Smartphones oder von Tablets, können damit nicht kalibriert werden.

In der US 6 439 722 B1 ist ein Verfahren zur Bildschirmkalibrierung mittels farbiger Folien (gesättiges Rot, Grün und Blau) offenbart. Die Folien werden auf den weißen Hintergrund des Bildschirms gelegt und visuell mit farblich ähnlichen eingeblendeten Farbfeldern verglichen. Allerdings nimmt das menschliche Auge Farbunterschiede gesättigter Farben nicht deutlich wahr, so dass dieses Verfahren nicht sonderlich genau ist.

In der US 7,102,648 B1 ist eine Referenzkarte mit einem farbigen transparenten Film und einer Öffnung offenbart, so dass eine Anzeigeeinheit durch die Öffnung und den farbigen transparenten Film zu betrachten ist.

### Darstellung der vorliegenden Erfindung: Aufgabe, Lösung, Vorteile

Ausgehend von den vorstehend dargelegten Nachteilen sowie unter Würdigung des umrissenen Stands der Technik liegt der vorliegenden Erfindung die Aufgabe zugrunde, Produkte möglichst farboptimal auf unterschiedlichen Anzeigeeinheiten, insbesondere auf unterschiedlichen Bildschirmen oder Monitoren oder Displays, darzustellen.

Diese Aufgabe wird bei einem gattungsgemäßen System gemäß dem Oberbegriff des Anspruchs 1 erfindungsgemäß durch dessen kennzeichnende Merkmale gelöst; insbesondere wird die Aufgabe auch durch die Verwendung der Referenzkarte und des Farbkorrekturprogramms gelöst. Zweckmäßige Ausgestaltungen und vorteilhafte Weiterbildungen der vorliegenden Erfindung sind in den Nebenansprüchen und in den Unteransprüchen gekennzeichnet.

Die vorliegende Erfindung betrifft also ein System
- mit einem ein virtuelles Farbbild in Form einer Bilddatei aus einzelnen Farbwerten auf seiner Website anzeigenden distalen Server und
- mit einem mit dem Server verbundenen, eine Anzeigeeinheit aufweisenden proximalen Rechner, welcher Rechner das virtuelle Farbbild des Servers über ein Anwendungsprogramm auf seiner Anzeigeeinheit anzeigt,
   [a] wobei auf Seiten des Rechners eine Referenzkarte vorgehalten wird, auf der sich mehrere verschiedenfarbige transluzente Referenzbereiche neben einem transparenten oder transluzenten Bereich oder einer Öffnung befinden,
   [b.1] wobei dann vom Anwendungsprogramm eine Routine auf dem Server und/oder auf dem Rechner gestartet wird, die zunächst einen ersten Farbton, zum Beispiel Cyan, mit einem ersten der Farbwerte abgibt, wobei dieser erste Farbton komplementär zur Farbe, zum Beispiel Rot, eines der transluzenten Referenzbereiche der Referenzkarte ist;
   [b.2] wobei dann die Referenzkarte mit demjenigen transluzenten Referenzbereich, dessen Farbe komplementär zum auf der Anzeigeeinheit angezeigten ersten Farbton ist, vor diesen ersten Farbton gehalten wird und eine Kennzeichnung desjenigen der transluzenten Referenzbereiche bestimmt und gespeichert wird, bei dem der durch Farbmischung von erstem Farbton und transluzentem Referenzbereich sich ergebende Grauton einem auf der Anzeigeeinheit angezeigten und durch den Bereich oder die Öffnung fallenden Grauton am nächsten kommt,
   [c] wobei der Schritt [b.1] und der Schritt [b.2] zumindest einmal unter Abgabe eines zweiten Farbtons, zum Beispiel Magenta, eines zweiten der Farbwerte, wobei dieser zweite Farbton komplementär zur Farbe, zum Beispiel Grün, eines anderen der transluzenten Referenzbereiche der Referenzkarte ist, sowie unter Bestimmen und Speichern der Kennzeichnung dieses anderen der transluzenten Referenzbereiche wiederholt werden,
   [d] wobei die in den vorangegangenen Schritten [b.1], [b.2], [c] bestimmten und auf dem Server und/oder auf dem Rechner gespeicherten Kennzeichnungen der Referenzbereiche in dieser Reihenfolge in ein auf dem Server und/oder auf dem Rechner gestartetes Farbkorrekturprogramm eingegeben werden und
   [e] wobei bei jeder vom Server gesendeten Bilddatei mittels des Farbkorrekturprogramms für jeden in der Bilddatei enthaltenen Farbwert unter Anwendung der als Korrekturwerte dienenden Kennzeichnungen das virtuelle Farbbild angepasst wird und dadurch dieses farboptimiert bezüglich seiner Aufnahmebedingungen angezeigt wird.

Gemäß einer bevorzugten Ausgestaltungsform der vorliegenden Erfindung können der Schritt [b.1] und der Schritt [b.2] zumindest ein weiteres Mal unter Abgabe eines dritten Farbtons, zum Beispiel Gelb, eines dritten der Farbwerte, wobei dieser dritte Farbton komplementär zur Farbe, zum Beispiel Blau, eines wiederum anderen der transluzenten Referenzbereiche der Referenzkarte ist, sowie unter Bestimmen und Speichern der Kennzeichnung dieses wiederum anderen der transluzenten Referenzbereiche wiederholt werden.

In vorteilhafter Weise kann die Referenzkarte so viele verschiedenfarbige transluzente Referenzbereiche aufweisen, wie von der Routine auf dem Server Farbtöne abgegeben werden.

Die einzelnen Farbwerte können in bevorzugter Weise als R[ot]G[rün]B[lau]-Pixeltripletts ausgebildet sein.

Nach einer zweckmäßigen Ausführungsform der vorliegenden Erfindung können Lambda-Korrekturwerte, insbesondere für jede R[ot]G[rün]B[lau]-Farbe, berechnet werden und kann dies als Kennzeichen gespeichert werden.

In bevorzugter Weise kann die Bilddatei in einem normierten Format vorliegen.

Gemäß einer vorteilhaften Ausgestaltungsform der vorliegenden Erfindung kann das virtuelle Farbbild mit einer Kamera unter normierten Licht- und Kameraverhältnissen, insbesondere unter der normierten Lichtbedingung D50 und mit dem standardisierten Farbraum sRGB, aufgenommen werden.

Die vorliegende Erfindung betrifft des Weiteren ein Verfahren zur Farboptimierung, wobei
[a] auf Seiten eines mit einem ein virtuelles Farbbild in Form einer Bilddatei aus einzelnen Farbwerten, insbesondere aus R[ot]G[rün]B[lau]-Pixeltripletts, auf seiner Website anzeigenden distalen Server verbundenen, eine Anzeigeeinheit aufweisenden proximalen Rechners, welcher Rechner das virtuelle Farbbild des Servers über ein Anwendungsprogramm auf seiner Anzeigeeinheit anzeigt, eine Referenzkarte vorgehalten wird, auf der sich mehrere verschiedenfarbige transluzente Referenzbereiche neben einem transparenten oder transluzenten Bereich oder einer Öffnung befinden,
[b.1] dann vom Anwendungsprogramm eine Routine auf dem Server und/oder auf dem Rechner gestartet wird, die zunächst einen ersten Farbton, zum Beispiel Cyan, mit einem ersten der Farbwerte abgibt, wobei dieser erste Farbton komplementär zur Farbe, zum Beispiel Rot, eines der transluzenten Referenzbereiche der Referenzkarte ist,
[b.2] dann die Referenzkarte mit demjenigen transluzenten Referenzbereich, dessen Farbe komplementär zum auf der Anzeigeeinheit angezeigten ersten Farbton ist, vor diesen ersten Farbton gehalten wird und eine Kennzeichnung desjenigen der transluzenten Referenzbereiche bestimmt und gespeichert wird, bei dem der durch Farbmischung von erstem Farbton und transluzentem Referenzbereich sich ergebende Grauton einem auf der Anzeigeeinheit angezeigten und durch den Bereich oder die Öffnung fallenden Grauton am nächsten kommt,
[c] der Schritt [b.1] und der Schritt [b.2] zumindest einmal unter Abgabe eines zweiten Farbtons, zum Beispiel Magenta, eines zweiten der Farbwerte, wobei dieser zweite Farbton komplementär zur Farbe, zum Beispiel Grün, eines anderen der transluzenten Referenzbereiche der Referenzkarte ist, sowie unter Bestimmen und Speichern der Kennzeichnung dieses anderen der transluzenten Referenzbereiche wiederholt werden,
[d] die in den vorangegangenen Schritten [b.1], [b.2], [c] bestimmten und auf dem Server und/oder auf dem Rechner gespeicherten Kennzeichnungen der Referenzbereiche in dieser Reihenfolge in ein auf dem Server und/oder auf dem Rechner gestartetes Farbkorrekturprogramm eingegeben werden und
[e] bei jeder vom Server gesendeten Bilddatei mittels des Farbkorrekturprogramms für jeden in der Bilddatei enthaltenen Farbwert unter Anwendung der als Korrekturwerte dienenden Kennzeichnungen das virtuelle Farbbild angepasst wird und dadurch dieses farboptimiert bezüglich seiner Aufnahmebedingungen angezeigt wird.

In bevorzugter Weise können der Server und der Rechner über das Internet verbunden sein.

In vorteilhafter Weise
- kann der Rechner als P[ersonal]C[omputer], als Notebook, als Smartphone, als Tablet oder als anderes mobiles Endgerät ausgebildet sein und/oder
- kann die Anzeigeeinheit als Bildschirm, als Monitor oder als Display ausgebildet sein.

In zweckmäßiger Weise kann das Anwendungsprogramm als App[likation] oder als Browser ausgebildet sein.

Die vorliegende Erfindung betrifft des Weiteren die Verwendung einer Routine auf dem Server und/oder auf dem Rechner des Systems gemäß der vorstehend dargelegten Art, welche Routine zunächst einen auf einen der transluzenten Referenzbereiche abgestimmten ersten Farbton, zum Beispiel Cyan, eines ersten der Farbwerte, insbesondere der R[ot]G[rün]B[lau]-Pixeltripletts, abgibt und danach zumindest einmal unter Abgabe eines auf einen anderen der transluzenten Referenzbereiche abgestimmten anderen Farbtons, zum Beispiel Magenta, eines anderen der Farbwerte, insbesondere der R[ot]G[rün]B[lau]-Pixeltripletts, wiederholt wird.

In zweckmäßiger Weise kann ein auf dem Rechner und/oder auf dem Server vorgesehenes Farbkorrekturprogramm vorhanden sein, in das die auf dem Server und/oder auf dem Rechner mittels der Referenzkarte bestimmten sowie gespeicherten Kennzeichnungen der transluzenten Referenzbereiche eingegeben werden und das jeden Farbwert der Bilddatei farboptimiert an die Anzeigeeinheit des Rechners abgibt.

Die vorliegende Erfindung betrifft schließlich die Verwendung einer Referenzkarte, auf der sich mehrere verschiedenfarbige transluzente Referenzbereiche neben einem/r einen auf einer Anzeigeeinheit, insbesondere auf einem Bildschirm oder auf einem Monitor oder auf einem Display, angezeigten Grauton durchlassenden transparenten oder transluzenten Bereich oder Öffnung befinden, und eines auf einem proximalen Rechner und/oder auf einem distalen Server von einem Anwendungsprogramm, insbesondere von einem Browser oder von einer App, gestarteten Farbkorrekturprogramms zur Anzeige eines bezüglich seiner Aufnahmebedingungen farboptimierten virtuellen Farbbilds auf Seiten des Rechners.

### Kurze Beschreibung der Zeichnungen

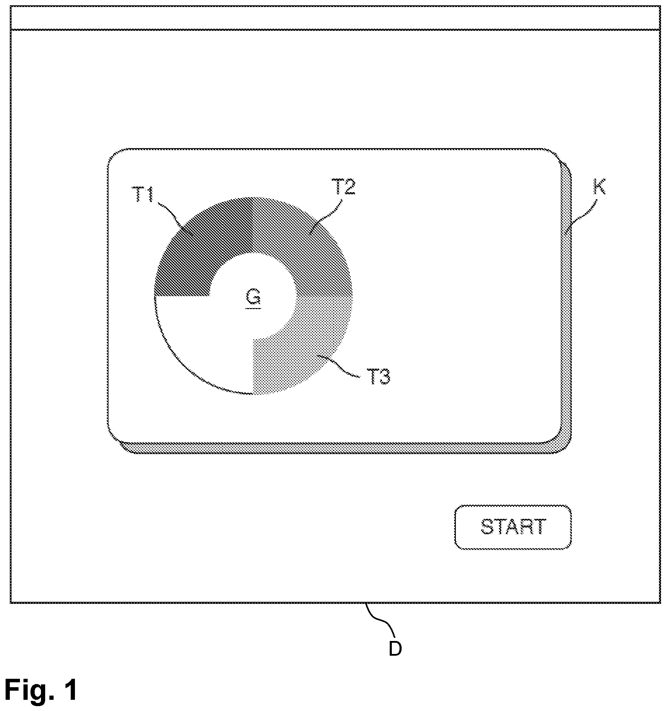

Es gibt verschiedene Möglichkeiten, die Lehre der vorliegenden Erfindung in vorteilhafter Weise auszugestalten und weiterzubilden. Hierzu werden weitere Ausgestaltungen, Merkmale und Vorteile der vorliegenden Erfindung nachstehend anhand des durch Fig. 1 veranschaulichten Ausführungsbeispiels näher erläutert, das eine vor eine Anzeigeeinheit gehaltene Referenzkarte mit drei verschiedenfarbigen transluzenten Referenzbereichen zeigt.

### Bester Weg zur Ausführung der vorliegenden Erfindung

Mittels einer Referenzkarte K gemäß Fig. 1 kann erfindungsgemäß jede Anzeigeeinheit D, also jeder Bildschirm oder jeder Monitor oder jedes Display eines Smartphones oder eines Tablets farboptimal kalibriert werden. Hierzu
- befindet sich, zum Beispiel beim distalen Server, auf der Website des Online-Händlers ein entsprechender Button oder Schaltknopf;
- durch Drücken dieses Buttons wird von einem Anwendungsprogramm, zum Beispiel von einer App oder von einem Browser, eine Routine gestartet, und es öffnet sich ein neues Browser-Fenster;
- die Referenzkarte K, auf der sich mindestens zwei, vorzugsweise drei (vgl. Fig. 1) oder vier, transluzente Referenzbereiche T1, T2, T3, insbesondere Farbfolien, zum Beispiel in den Farben Rot, Grün, Blau oder in den Farben Cyan, Magenta, Gelb, Grau befinden, wird in Bezug zum virtuellen Farbbild auf dem Monitor D des proximalen Rechners gesetzt (vgl. Fig. 1);
- es wird, zum Beispiel auf dem distalen Server, eine Routine durchlaufen, in der durch die transluzente und teilweise transparente Karte hindurch, zum Beispiel in der Mitte, ein neutrales Graufeld (R[ot]-Wert, G[rün]-Wert und B[lau]-Wert identisch) und hinter den Referenzfarbfolien nacheinander verschiedene Komplementärfarben zu Rot, Grün und Blau, das heißt Cyan, Magenta und Gelb angezeigt werden, die durch Farbmischung von Bildschirmfarbe und Referenzfarbfolie verschiedene Grautöne ergeben; die Farbfolien werden also nicht mit Bildschirm-Weiß hinterlegt, sondern mit der jeweiligen Komplementärfarbe: die rote Farbfolie wird mit einem vom Bildschirm (bzw. Computer) erzeugten Cyan hinterleuchtet, und die erzeugte Mischfarbe neutralisiert sich zu Grau; dieses Grau hat je nach Bildschirmtyp einen Farbstich und kann zu einem neben der Farbfolie, nämlich durch den transparenten oder transluzenten Bereich oder Öffnung G der Referenzkarte K hindurch angezeigten "neutralen" Grau (R[ot]G[rün]B[lau]-Wert gleich) der Anzeigeeinheit D in Beziehung gesetzt werden;
- es erfolgt ein, zum Beispiel visueller oder mittels eines Colorimeters, eines Spektralphotometers oder einer Farbkamera bewerkstelligter, Abgleich oder Vergleich durch Bestimmung eines Kennzeichens dahin gehend, welches als angezeigte Mischung aus Bildschirmfarbe und Folienfarbe erzeugte Grau dem neutral erzeugten Bildschirmgrau in der Mitte am nächsten kommt; dies hat den Vorteil, dass das menschliche Auge und die Farbmesstechnik empfindlicher bezüglich Verschiebungen der Graubalance ist und demzufolge feinste Abweichungen um die Grauwerte als Farbverschiebungen wahrnimmt, so dass ein farbmetrisch empfindliches sowie präzises System zur Verfügung gestellt wird, das jedenfalls genauer arbeitet, als wenn zwei gesättigte, nebeneinanderliegende Rote, grüne oder blaue Farbfelder verglichen werden;
- diese Kennzeichen werden als Korrekturwerte in ein Farbkorrekturprogramm eingegeben und auf alle von der Anzeigeeinheit D angezeigten Bilddateien, zum Beispiel von der Website des Online-Händlers des distalen Servers, angewendet, das heißt Artikel auf der Website des Online-Händlers werden auf dem Monitor des proximalen Rechners farboptimiert angezeigt; insbesondere werden durch unterschiedliche Bildschirme und/oder durch Bildschirmeinstellungen bedingte Farbabweichungen kompensiert.

Hierbei sind die Anzahl und die Art der Referenzbereiche T1, T2, T3 hinsichtlich der Farben auf der verwendeten Farbfolie der Karte beispielhaft zu sehen. Wichtig ist nur, dass jeder Referenzbereich T1, T2, T3 einem Farbton zugeordnet ist. Die Farbtöne selbst müssen daher nicht zwangsläufig die drei Grundfarben Rot, Grün und Blau sein.

Dies ist zwar zweckmäßig, wenn die Farben eines Bildschirms aus den Grundfarben R[ot]G[rün]B[lau] gemischt werden; es können aber zur Farbanpassung beliebige Farben herangezogen werden, sofern sie im Farbraum ausreichend weit voneinander entfernt sind, insbesondere sich im Farbraum möglichst gegenüberliegen; es ist zum Beispiel auch eine Referenzkarte K mit Farbfeldern oder -folien von Cyan, Magenta und Gelb möglich, also auf Basis des C[yan]M[agenta]Y[ellow]-Farbmodells.

So lässt sich eine Anpassung der Bildschirmfarben auch schon mittels zweier Referenzbereiche T1, T2, zum Beispiel mittels zweier Farbfolien, durchführen, wenn in diesem Falle auch ohne Beeinflussung der Helligkeit. In gleicher Weise können auch mehr als drei Farbfolien zur Optimierung der Bildschirmfarben verwendet werden, was zu einer Erhöhung der Genauigkeit führen und/oder zur Validierung der ersten Kalibrierschritte verwendet werden kann.

Auch muss es sich bei der in der Mitte der Karte angezeigten, durch den Bildschirm erzeugten Bezugsfarbe nicht zwangsläufig um ein neutrales Grau (R[ot]G[rün]B[lau]-Wert identisch) handeln, sondern es kann eine beliebige RGB-Variation erzeugt werden, die durch Mischung der Referenzfarbfolien und der am Bildschirm erzeugten Komplementärfarben simuliert wird.

Auch kann zur Erhöhung der Genauigkeit das beschriebene Verfahren nacheinander mit mehreren RGB-Farbkombinationen durchgeführt werden.

Unabhängig hiervon oder in Verbindung hiermit ist denkbar, dass ein/e Anwender/in die Farbfolien nicht direkt an den Monitor hält, sondern vor sein Auge bzw. als Brille aufsetzt (vergleichbar einer 3D-Brille mit roter und grüner Farbfolie).

Auch kann ein Farbmessgerät oder eine Kamera, zum Beispiel eines Smartphones, verwendet werden, um alle Farbfelder auszuwerten.

### Liste der Bezugszeichen

- D: Anzeigeeinheit, insbesondere Bildschirm oder Monitor oder Display
- G: Öffnung oder transparenter oder transluzenter Bereich
- K: Referenzkarte
- T1: erster transluzenter Referenzbereich
- T2: zweiter transluzenter Referenzbereich
- T3: dritter transluzenter Referenzbereich

## Patentansprüche

1. System
- mit einem ein virtuelles Farbbild in Form einer Bilddatei aus einzelnen Farbwerten auf seiner Website anzeigenden distalen Server,
- mit einem mit dem Server verbundenen, eine Anzeigeeinheit (D) aufweisenden proximalen Rechner, welcher Rechner das virtuelle Farbbild des Servers über ein Anwendungsprogramm auf seiner Anzeigeeinheit (D) anzeigt,
**gekennzeichnet durch**
[a] eine Referenzkarte (K), die auf Seiten des Rechners vorgesehen ist und auf der sich mehrere verschiedenfarbige transluzente Referenzbereiche (T1, T2, T3) neben einem transparenten oder transluzenten Bereich oder einer Öffnung (G) befinden,
[b.1] wobei dann vom Anwendungsprogramm eine Routine auf dem Server und/oder auf dem Rechner startbar ist, die zunächst einen ersten Farbton, zum Beispiel Cyan, mit einem ersten der Farbwerte abgibt, wobei dieser erste Farbton komplementär zur Farbe, zum Beispiel Rot, eines (T1) der transluzenten Referenzbereiche (T1, T2, T3) der Referenzkarte (K) ist,
[b.2] wobei dann die Referenzkarte (K) mit demjenigen transluzenten Referenzbereich (T1), dessen Farbe komplementär zum auf der Anzeigeeinheit (D) angezeigten ersten Farbton ist, vor diesen ersten Farbton haltbar ist und eine Kennzeichnung desjenigen (T1) der transluzenten Referenzbereiche (T1, T2, T3) bestimmbar und speicherbar ist, bei dem der durch Farbmischung von erstem Farbton und transluzentem Referenzbereich (T1) sich ergebende Grauton einem auf der Anzeigeeinheit (D) angezeigten und durch den Bereich oder die Öffnung (G) fallenden Grauton am nächsten kommt,
[c] wobei der Schritt [b.1] und der Schritt [b.2] zumindest einmal unter Abgabe eines zweiten Farbtons, zum Beispiel Magenta, eines zweiten der Farbwerte, wobei dieser zweite Farbton komplementär zur Farbe, zum Beispiel Grün, eines anderen (T2) der transluzenten Referenzbereiche (T1, T2, T3) der Referenzkarte (K) ist, sowie unter Bestimmen und Speichern der Kennzeichnung dieses anderen (T2) der transluzenten Referenzbereiche (T1, T2, T3) wiederholbar sind,
[d] wobei die in den vorangegangenen Schritten [b.1], [b.2], [c] bestimmten und auf dem Server und/oder auf dem Rechner gespeicherten Kennzeichnungen der Referenzbereiche (T1, T2, T3) in dieser Reihenfolge in ein auf dem Server und/oder auf dem Rechner gestartetes Farbkorrekturprogramm eingebbar sind und
[e] wobei bei jeder vom Server gesendeten Bilddatei mittels des Farbkorrekturprogramms für jeden in der Bilddatei enthaltenen Farbwert unter Anwendung der als Korrekturwerte dienenden Kennzeichnungen das virtuelle Farbbild anpassbar ist und dadurch dieses farboptimiert bezüglich seiner Aufnahmebedingungen anzeigbar ist.

2. System gemäß Anspruch 1, **dadurch gekennzeichnet, dass** der Schritt [b.1] und der Schritt [b.2] zumindest ein weiteres Mal unter Abgabe eines dritten Farbtons, zum Beispiel Gelb, eines dritten der Farbwerte, wobei dieser dritte Farbton komplementär zur Farbe, zum Beispiel Blau, eines wiederum anderen (T3) der transluzenten Referenzbereiche (T1, T2, T3) der Referenzkarte (K) ist, sowie unter Bestimmen und Speichern der Kennzeichnung dieses wiederum anderen (T3) der transluzenten Referenzbereiche (T1, T2, T3) wiederholbar sind.

3. System gemäß Anspruch 1 oder 2, **dadurch gekennzeichnet, dass** die Referenzkarte (K) so viele verschiedenfarbige transluzente Referenzbereiche (T1, T2, T3) aufweist, wie von der Routine auf dem Server Farbtöne abgebbar sind.

4. System gemäß mindestens einem der Ansprüche 1 bis 3, **dadurch gekennzeichnet, dass** die Farbwerte durch R[ot]G[rün]B[lau]-Pixeltripletts gegeben sind.

5. System gemäß mindestens einem der Ansprüche 1 bis 4, **dadurch gekennzeichnet, dass** Lambda-Korrekturwerte, insbesondere für jede R[ot]G[rün]B[lau]-Farbe, berechenbar sind und dies als Kennzeichen speicherbar ist.

6. System gemäß mindestens einem der Ansprüche 1 bis 5, **dadurch gekennzeichnet, dass** die Bilddatei in einem normierten Format vorliegt.

7. System gemäß mindestens einem der Ansprüche 1 bis 6, **dadurch gekennzeichnet, dass** das virtuelle Farbbild mit einer Kamera unter normierten Licht- und Kameraverhältnissen, insbesondere unter der normierten Lichtbedingung D50 und mit dem standardisierten Farbraum sRGB, aufnehmbar ist.

8. System gemäß mindestens einem der Ansprüche 1 bis 7, **dadurch gekennzeichnet, dass** der Server und der Rechner über das Internet verbunden sind.

9. System gemäß mindestens einem der Ansprüche 1 bis 8, **dadurch gekennzeichnet,**
- **dass** der Rechner als P[ersonal]C[omputer], als Notebook, als Smartphone, als Tablet oder als anderes mobiles Endgerät ausgebildet ist und/oder
- **dass** die Anzeigeeinheit (D) als Bildschirm, als Monitor oder als Display ausgebildet ist.

10. System gemäß mindestens einem der Ansprüche 1 bis 9, **dadurch gekennzeichnet, dass** das Anwendungsprogramm als App[likation] oder als Browser ausgebildet ist.

11. Verfahren zur Farboptimierung unter Einsatz eines Systems gemäß dem Oberbegriff des Anspruchs 1, wobei
[a] auf Seiten des mit dem das virtuelle Farbbild in Form der Bilddatei aus den einzelnen Farbwerten, insbesondere aus R[ot]G[rün]B[lau]-Pixeltripletts, auf seiner Website anzeigenden distalen Server verbundenen, die Anzeigeeinheit (D) aufweisenden proximalen Rechners, welcher Rechner das virtuelle Farbbild des Servers über das Anwendungsprogramm auf seiner Anzeigeeinheit (D) anzeigt, eine Referenzkarte (K) vorgehalten wird, auf der sich mehrere verschiedenfarbige transluzente Referenzbereiche (T1, T2, T3) neben einem transparenten oder transluzenten Bereich oder einer Öffnung (G) befinden,
[b.1] dann vom Anwendungsprogramm eine Routine auf dem Server und/oder auf dem Rechner gestartet wird, die zunächst einen ersten Farbton, zum Beispiel Cyan, mit einem ersten der Farbwerte abgibt, wobei dieser erste Farbton komplementär zur Farbe, zum Beispiel Rot, eines (T1) der transluzenten Referenzbereiche (T1, T2, T3) der Referenzkarte (K) ist,
[b.2] dann die Referenzkarte (K) mit demjenigen transluzenten Referenzbereich (T1), dessen Farbe komplementär zum auf der Anzeigeeinheit (D) angezeigten ersten Farbton ist, vor diesen ersten Farbton gehalten wird und eine Kennzeichnung desjenigen (T1) der transluzenten Referenzbereiche (T1, T2, T3) bestimmt und gespeichert wird, bei dem der durch Farbmischung von erstem Farbton und transluzentem Referenzbereich (T1) sich ergebende Grauton einem auf der Anzeigeeinheit (D) angezeigten und durch den Bereich oder die Öffnung (G) fallenden Grauton am nächsten kommt,
[c] der Schritt [b.1] und der Schritt [b.2] zumindest einmal unter Abgabe eines zweiten Farbtons, zum Beispiel Magenta, eines zweiten der Farbwerte, wobei dieser zweite Farbton komplementär zur Farbe, zum Beispiel Grün, eines anderen (T2) der transluzenten Referenzbereiche (T1, T2, T3) der Referenzkarte (K) ist, sowie unter Bestimmen und Speichern der Kennzeichnung dieses anderen (T2) der transluzenten Referenzbereiche (T1, T2, T3) wiederholt werden,
[d] die in den vorangegangenen Schritten [b.1], [b.2], [c] bestimmten und auf dem Server und/oder auf dem Rechner gespeicherten Kennzeichnungen der Referenzbereiche (T1, T2, T3) in dieser Reihenfolge in ein auf dem Server und/oder auf dem Rechner gestartetes Farbkorrekturprogramm eingegeben werden und
[e] bei jeder vom Server gesendeten Bilddatei mittels des Farbkorrekturprogramms für jeden in der Bilddatei enthaltenen Farbwert unter Anwendung der als Korrekturwerte dienenden Kennzeichnungen das virtuelle Farbbild angepasst wird und dadurch dieses farboptimiert bezüglich seiner Aufnahmebedingungen angezeigt wird.

12. Verwendung einer Routine auf dem Server und/oder auf dem Rechner des Systems gemäß mindestens einem der Ansprüche 1 bis 10, welche Routine zunächst einen (T1) auf einen der transluzenten Referenzbereiche (T1, T2, T3) abgestimmten ersten Farbton, zum Beispiel Cyan, eines ersten der Farbwerte, insbesondere der R[ot]G[rün]B[lau]-Pixeltripletts, abgibt und danach zumindest einmal unter Abgabe eines auf einen anderen (T2) der transluzenten Referenzbereiche (T1, T2, T3) abgestimmten anderen Farbtons, zum Beispiel Magenta, eines anderen der Farbwerte, insbesondere der R[ot]G[rün]B[lau]-Pixeltripletts, wiederholt wird.

13. Verwendung gemäß Anspruch 12, **gekennzeichnet durch** ein auf dem Rechner und/oder auf dem Server vorgesehenes Farbkorrekturprogramm, in das die auf dem Server und/oder auf dem Rechner mittels der Referenzkarte (K) bestimmten sowie gespeicherten Kennzeichnungen der transluzenten Referenzbereiche (T1, T2, T3) eingegeben werden und das jeden Farbwert der Bilddatei farboptimiert an die Anzeigeeinheit (D) des Rechners abgibt.

14. Verwendung einer Referenzkarte (K) im Verfahren gemäß Anspruch 11, auf welcher Referenzkarte (K) sich mehrere verschiedenfarbige transluzente Referenzbereiche (T1, T2, T3) neben einem/r einen auf einer Anzeigeeinheit (D), insbesondere auf einem Bildschirm oder auf einem Monitor oder auf einem Display, angezeigten Grauton durchlassenden transparenten oder transluzenten Bereich oder Öffnung (G) befinden, und eines auf einem proximalen Rechner und/oder auf einem distalen Server von einem Anwendungsprogramm, insbesondere von einem Browser oder von einer App, gestarteten Farbkorrekturprogramms zur Anzeige eines bezüglich seiner Aufnahmebedingungen farboptimierten virtuellen Farbbilds auf Seiten des Rechners.

15. Verwendung gemäß Anspruch 14 unter Einsatz der Bestandteile des Systems gemäß mindestens einem der Ansprüche 2 bis 10.

## Claims

1. A system
- with a distal server displaying a virtual colour image in the form of an image file comprising individual colour values on its website, and
- with a proximal computer connected to the server and comprising a display unit (D), said computer displaying the virtual colour image of the server on its display unit (D) by means of an application program,
**characterized by**
[a] a reference card (K) provided on the part of the computer and containing multiple differently coloured translucent reference areas (T1, T2, T3) besides a transparent or translucent area or an opening (G),
[b.1] wherein a routine on the server and/or on the computer is then startable by the application program, said routine firstly outputting a first colour shade, for example cyan, with a first of the colour values, wherein said first colour shade is complementary to the colour, for example red, of one (T1) of the translucent reference areas (T1, T2, T3) of the reference card (K),
[b.2] wherein the reference card (K) is then holdable with that translucent reference area(T1) the colour of which is complementary to the first colour shade displayed on the display unit (D) in front of said first colour shade, and a marking of that (T1) of the translucent reference areas (T1, T2, T3) for which the grey shade resulting from colour mixing of the first colour shade and the translucent reference area (T1) comes closest to a grey shade displayed on the display unit (D) and falling through the area or the opening (G) is determinable and storable,
[c] wherein the step [b.1] and the step [b.2] are repeatable at least once to output a second colour shade, for example magenta, of a second of the colour values, said second colour shade being complementary to the colour, for example green, of another (T2) of the translucent reference areas (T1, T2, T3) of the reference card (K), and to determine and store the marking of said other (T2) of the translucent reference areas (T1, T2, T3),
[d] wherein the markings of the reference areas (T1, T2, T3) determined in the preceding steps [b.1], [b.2], [c] and stored on the server and/or on the computer are inputtable in this order into a colour correction program started on the server and/or on the computer, and
[e] wherein for every image file sent by the server the virtual colour image is adjustable by means of the colour correction program for each colour value contained in the image file by applying the markings used as correction values, and thus said virtual colour image is displayable in colours optimized in respect of its recording conditions.

2. The system according to claim 1, **characterized in that** the step [b.1] and the step [b.2] are repeatable at least one more time to output a third colour shade, for example yellow, of a third of the colour values, said third colour shade being complementary to the colour, for example blue, of still another (T3) of the translucent reference areas (T1, T2, T3) of the reference card (K), and to determine and store the marking of said still other (T3) of the translucent reference areas (T1, T2, T3).

3. The system according to claim 1 or 2, **characterized in that** the reference card (K) comprises as many differently coloured translucent reference areas (T1, T2, T3) as colour shades are outputtable by the routine on the server.

4. The system according to at least one of claims 1 to 3, **characterized in that** the colour values are given by R[ed]G[reen]B[lue] pixel triplets.

5. The system according to at least one of claims 1 to 4, **characterized in that** Lambda correction values, in particular for each R[ed]G[reen]B[lue] colour, are calculable, and this is storable as marking.

6. The system according to at least one of claims 1 to 5, **characterized in that** the image file is available in a standardized format.

7. The system according to at least one of claims 1 to 6, **characterized in that** the virtual colour image is recordable with a camera under standardized light and camera conditions, in particular under the standardized light condition D50 and with the standardized colour space sRGB.

8. The system according to at least one of claims 1 to 7, **characterized in that** the server and the computer are connected via the internet.

9. The system according to at least one of claims 1 to 8, **characterized in**
- **that** the computer is embodied as P[ersonal]C[omputer], as notebook, as smartphone, as tablet computer or as other mobile equipment and/or
- **that** the display unit (D) is embodied as screen, as monitor or as display.

10. The system according to at least one of claims 1 to 9, **characterized in that** the application program is embodied as app[lication] or as browser.

11. A method for colour optimization using a system according to the preamble of claim 1 wherein
[a] a reference card (K) is held on the part of the proximal computer and contains multiple differently coloured translucent reference areas (T1, T2, T3) besides a transparent or translucent area or an opening (G), said proximal computer being connected to the distal server displaying the virtual colour image in the form of the image file comprising the individual colour values, in particular R[ed]G[reen]B[lue] pixel triplets, on its website, said proximal computer comprising the display unit (D), said computer displaying the virtual colour image of the server on its display unit (D) by means of the application program,
[b.1] a routine on the server and/or on the computer is then started by the application program, said routine firstly outputting a first colour shade, for example cyan, with a first of the colour values, wherein said first colour shade is complementary to the colour, for example red, of one (T1) of the translucent reference areas (T1, T2, T3) of the reference card (K),
[b.2] the reference card (K) is then held with that translucent reference area (T1) the colour of which is complementary to the first colour shade displayed on the display unit (D) in front of said first colour shade, and a marking of that (T1) of the translucent reference areas (T1, T2, T3) for which the grey shade resulting from colour mixing of the first colour shade and the translucent reference area (T1) comes closest to a grey shade displayed on the display unit (D) and falling through the area or the opening (G) is determined and stored,
[c] wherein the step [b.1] and the step [b.2] are repeated at least once to output a second colour shade, for example magenta, of a second of the colour values, said second colour shade being complementary to the colour, for example green, of another (T2) of the translucent reference areas (T1, T2, T3) of the reference card (K), and to determine and store the marking of said other (T2) of the translucent reference areas (T1, T2, T3),
[d] the markings of the reference areas (T1, T2, T3) determined in the preceding steps [b.1], [b.2], [c] and stored on the server and/or on the computer are input in this order into a colour correction program started on the server and/or on the computer, and
[e] for every image file sent by the server the virtual colour image is adjusted by means of the colour correction program for each colour value contained in the image file by applying the markings used as correction values, and thus said virtual colour image is displayed in colours optimized in respect of its recording conditions.

12. A use of a routine on the server and/or on the computer of the system according to at least one of claims 1 to 10, said routine firstly outputting a (T1) first colour shade, for example cyan, of a first of the colour values, in particular of the R[ed]G[reen]B[lue] pixel triplets, said first colour shade being matched with one of the translucent reference areas (T1, T2, T3), and then being repeated at least once to output another colour shade, for example magenta, of another of the colour values, in particular of the R[ed]G[reen]B[lue] pixel triplets, said other colour shade being matched with another (T2) of the translucent reference areas (T1, T2, T3).

13. The use according to claim 12, **characterized by** a colour correction program provided on the computer and/or on the server, into which colour correction program the markings of the translucent reference areas (T1, T2, T3) are input, said markings being determined and stored on the server and/or on the computer by means of the reference card (K), said colour correction program outputting each colour value of the image file to the display unit (D) of the computer in optimized colours.

14. A use of a reference card (K) in the method according to claim 11, said reference card (K) containing multiple differently coloured translucent reference areas (T1, T2, T3) besides a transparent or translucent area or an opening (G) letting through a grey shade displayed on a display unit (D), in particular on a screen or on a monitor or on a display, and of a colour correction program for displaying a virtual colour image in colours optimized in respect of its recording conditions on the part of the computer, said colour correction program started on a proximal computer and/or on a distal server by an application program, in particular by a browser or by an app.

15. The use according to claim 14 under application of components of the system according to at least one of claims 2 to 10.

## Revendications

1. Système
- avec un serveur distal, qui présente une image de couleur virtuelle sous la forme d'un fichier image constitué de valeurs de couleur individuelles sur son site Web,
- avec un ordinateur proximal qui est relié au serveur et qui comporte une unité d'affichage (D), lequel ordinateur affiche l'image de couleur virtuelle du serveur via un programme d'application sur son unité d'affichage (D),
**caractérisé par**
[a] une carte de référence (K) qui est prévue du côté de l'ordinateur et sur laquelle plusieurs zones de référence translucides (T1, T2, T3) de couleurs différentes se trouvent à côté d'une zone transparente ou translucide ou d'une ouverture (G),
[b.1] à condition que le programme d'application peut ensuite démarrer une routine sur le serveur et/ou sur l'ordinateur qui délivre tout d'abord un premier ton de couleur, par exemple le cyan, ayant l'une première des valeurs de couleur, ce premier ton de couleur étant complémentaire de la couleur, par exemple le rouge, d'une (T1) des zones de référence translucides (T1, T2, T3) de la carte de référence (K),
[b.2] à condition que la carte de référence (K) avec la zone de référence translucide (T1) dont la couleur est complémentaire du premier ton de couleur affiché sur l'unité d'affichage (D) peut ensuite être tenue devant ce premier ton de couleur et une caractéristique de celle (T1) des zones de référence translucides (T1, T2, T3) peut être déterminée et mémorisée dans laquelle le ton de gris, obtenu par mélange du premier ton de couleur et de la zone de référence translucide (T1), est le plus proche d'un ton de gris qui est affiché sur l'unité d'affichage (D) et qui passe par la zone ou l'ouverture (G),
[c] à condition que l'étape [b.1] et l'étape [b.2] peuvent être répétées au moins une fois avec délivrance d'un second ton de couleur, par exemple le magenta, d'une seconde des valeurs de couleur, ce second ton de couleur étant complémentaire de la couleur, par exemple le vert, d'une autre (T2) des zones de référence translucides (T1, T2, T3) de la carte de référence (K) et avec détermination et mémorisation de la caractéristique de cette autre (T2) des zones de référence translucides (T1, T2, T3),
[d] à condition que les caractéristiques des zones de référence (T1, T2, T3), déterminées dans les étapes précédentes [b.1], [b.2], [c] et mémorisées sur le serveur et/ou sur l'ordinateur, peuvent être entrées dans cet ordre dans un programme de correction de couleur démarré sur le serveur et/ou sur l'ordinateur et
[e] à condition que l'image de couleur virtuelle peut être adaptée au moyen du programme de correction de couleur pour chaque valeur de couleur contenu dans le fichier image, par utilisation des caractéristiques servant de valeurs de correction, pour chaque fichier image envoyé par le serveur, et cette image de couleur virtuelle peut être affichée de façon optimisée en termes de couleur par rapport aux conditions d'enregistrement de celle-ci.

2. Système selon la revendication 1, **caractérisé en ce que** l'étape [b.1] et l'étape [b.2] peuvent être répétées au moins une fois de plus avec délivrance d'un troisième ton de couleur, par exemple le jaune, d'une troisième des valeurs de couleur, ce troisième ton de couleur étant complémentaire de la couleur, par exemple le bleu, d'une plus autre (T3) des zones de référence translucides (T1, T2, T3) de la carte de référence (K) et avec détermination et mémorisation de la caractéristique de cette autre (T3) des zones de référence translucides (T1, T2, T3).

3. Système selon la revendication 1 ou 2, **caractérisé en ce que** la carte de référence (K) comporte autant de zones de référence translucides (T1, T2, T3) en différentes couleurs qu'il y a de tons de couleurs qui peuvent être sorties de la routine sur le serveur.

4. Système selon au moins l'une des revendications 1 à 3, **caractérisé en ce que** les valeurs de couleur sont données par des triplets de pixels R[ouge]V[ert]B[leu].

5. Système selon au moins l'une des revendications 1 à 4, **caractérisé en ce que** des valeurs de correction lambda, en particulier pour chaque couleur R[ouge]V[ert]B[leu], peuvent être calculées et peuvent être mémorisées comme caractéristique.

6. Système selon au moins l'une des revendications 1 à 5, **caractérisé en ce que** le fichier image est disponible dans un format normalisé.

7. Système selon au moins l'une des revendications 1 à 6, **caractérisé en ce que** l'image de couleur virtuelle peut être enregistrée avec une caméra dans des conditions de lumière et de caméra normalisées, en particulier dans la condition de lumière normalisée D50 et avec l'espace couleur normalisé sRVB.

8. Système selon au moins l'une des revendications 1 à 7, **caractérisé en ce que** le serveur et l'ordinateur sont connectés via Internet.

9. Système selon au moins l'une des revendications 1 à 8, **caractérisé en ce**
- **que** l'ordinateur est formé comme ordinateur personnel, comme ordinateur portable, comme smartphone, comme ordinateur tablette ou comme tout autre appareil terminal mobile et/ou
- **que** l'unité d'affichage (D) est formée comme écran, comme moniteur ou comme display.

10. Système selon au moins l'une des revendications 1 à 9, **caractérisé en ce que** le programme d'application est formé comme app[lication] ou comme navigateur.

11. Procédé d'optimisation de la couleur en utilisant un système selon le préambule de la revendication 1, à condition qu'
[a] une carte de référence (K) est tenue du côté de l'ordinateur proximal, qui est relié au serveur distal et qui comporte l'unité d'affichage (D), lequel serveur distal présentant l'image de couleur virtuelle sous la forme du fichier image constitué des valeurs de couleur individuelles, en particulier de triplets de pixels R[ouge]V[ert]B[leu], sur son site Web, lequel ordinateur affichant l'image de couleur virtuelle du serveur via le programme d'application sur son unité d'affichage (D), plusieurs zones de référence (T1, T2, T3) translucides de couleurs différentes se trouvant à côté d'une zone transparente ou translucide ou d'une ouverture (G) sur la carte de référence (K),
[b.1] une routine est ensuite démarré sur le serveur et/ou sur l'ordinateur par le programme d'application, laquelle routine délivrant tout d'abord un premier ton de couleur, par exemple le cyan, ayant l'une première des valeurs de couleur, ce premier ton de couleur étant complémentaire de la couleur, par exemple le rouge, d'une (T1) des zones de référence translucides (T1, T2, T3) de la carte de référence (K),
[b.2] la carte de référence (K) avec la zone de référence translucide (T1) dont la couleur est complémentaire du premier ton de couleur affiché sur l'unité d'affichage (D) est ensuite tenue devant ce premier ton de couleur et une caractéristique de celle (T1) des zones de référence translucides (T1, T2, T3) est déterminée et mémorisée dans laquelle le ton de gris, obtenu par mélange du premier ton de couleur et de la zone de référence translucide (T1), est le plus proche d'un ton de gris qui est affiché sur l'unité d'affichage (D) et qui passe par la zone ou l'ouverture (G),
[c] l'étape [b.1] et l'étape [b.2] sont répétées au moins une fois avec délivrance d'un second ton de couleur, par exemple le magenta, d'une seconde des valeurs de couleur, ce second ton de couleur étant complémentaire de la couleur, par exemple le vert, d'une autre (T2) des zones de référence translucides (T1, T2, T3) de la carte de référence (K) et avec détermination et mémorisation de la caractéristique de cette autre (T2) des zones de référence translucides (T1, T2, T3),
[d] les caractéristiques des zones de référence (T1, T2, T3), déterminées dans les étapes précédentes [b.1], [b.2], [c] et mémorisées sur le serveur et/ou sur l'ordinateur, sont entrées dans cet ordre dans un programme de correction de couleur démarré sur le serveur et/ou sur l'ordinateur et
[e] l'image de couleur virtuelle est adaptée au moyen du programme de correction de couleur pour chaque valeur de couleur contenu dans le fichier image, par utilisation des caractéristiques servant de valeurs de correction, pour chaque fichier image envoyé par le serveur, et cette image de couleur virtuelle est affichée de façon optimisée en termes de couleur par rapport aux conditions d'enregistrement de celle-ci.

12. Utilisation d'une routine sur le serveur et/ou sur l'ordinateur du système selon au moins l'une des revendications 1 à 10, laquelle routine délivre tout d'abord un (T1) premier ton de couleur, par exemple le cyan, d'une première des valeurs de couleur, en particulier des triplets de pixels R[ouge]V[ert]B[leu], ce premier ton de couleur étant adapté à l'une des zones de référence translucides (T1, T2, T3), et laquelle routine est ensuite répétée au moins une fois avec délivrance d'un autre ton de couleur, par exemple le magenta, d'une autre des valeurs de couleur, en particulier des triplets de pixels R[ouge]V[ert]B[leu], cet autre ton de couleur étant adapté à l'une autre (T2) des zones de référence translucides (T1, T2, T3).

13. Utilisation selon la revendication 12, **caractérisée par** un programme de correction de couleur qui est prévu sur l'ordinateur et/ou sur le serveur et dans lequel sont entrées les caractéristiques des zones de référence translucides (T1, T2, T3) déterminées et mémorisées sur le serveur et/ou sur l'ordinateur au moyen de la carte de référence (K), et qui délivre chaque valeur de couleur du fichier image à l'unité d'affichage (D) de l'ordinateur de façon optimisée en termes de couleur.

14. Utilisation d'une carte de référence (K) dans le procédé selon la revendication 11, sur laquelle carte de référence (K) plusieurs zones de référence translucides (T1, T2, T3) de couleurs différentes se trouvent à côté d'une zone transparente ou translucide ou d'une ouverture (G), cette zone ou ouverture (G) laissant passer un ton de gris qui est affiché sur une unité d'affichage (D), en particulier sur un écran ou sur un moniteur ou sur un display, et d'un programme de correction de couleur démarré sur un ordinateur proximal et/ou sur un serveur distal par un programme d'application, en particulier par un navigateur ou par une app, pour afficher du côté de l'ordinateur une image de couleur virtuelle optimisée en termes de couleur par rapport aux conditions d'enregistrement de celle-ci.

15. Utilisation selon la revendication 14 en utilisant les composants du système selon au moins l'une des revendications 2 à 10.
